# EUROPÄISCHE PATENTSCHRIFT

(11) **EP 2 517 079 B1**
(45) Veröffentlichungstag und Bekanntmachung des Hinweises auf die Patenterteilung: **19.10.2016**
(21) Anmeldenummer: 10796018.9
(22) Anmeldetag: 17.12.2010
(51) Int. Cl.: G05B 23/02

(54) **VORRICHTUNG, SYSTEM UND VERFAHREN ZUM SICHEREN BETRIEB TECHNISCHER ANLAGEN**
DEVICE, SYSTEM AND METHOD FOR THE SECURE OPERATION OF TECHNICAL SYSTEMS
DISPOSITIF, SYSTÈME ET PROCÉDÉ POUR FAIRE FONCTIONNER DES INSTALLATIONS TECHNIQUES DE MANIÈRE SÛRE

(30) Priorität: 21.12.2009 DE 102009059772
(43) Veröffentlichungstag der Anmeldung: 31.10.2012
(73) Patentinhaber: Currenta GmbH & Co. OHG, 51368 Leverkusen (DE)
(72) Erfinder: VON STUMBERG, Axel, 51069 Köln (DE)
(74) Vertreter: BIP Patents
(86) Internationale Anmeldenummer: PCT/EP2010/070046
(87) Internationale Veröffentlichungsnummer: WO 2011/085906

(56) Entgegenhaltungen:
- US-A1- 2003 025 682
- US-A1- 2008 294 988

## Beschreibung

Die vorliegende Erfindung betrifft eine Vorrichtung sowie ein solche Vorrichtungen umfassendes System für den sicheren Betrieb einer technischen Anlage, sowie ein Verfahren unter Verwendung der erfindungsgemäßen Vorrichtung oder eines erfindungsgemäßen Systems, das einen störungsfreien und sicheren Betrieb von technischen Anlagen erlaubt.

Bei dem Betrieb von technischen Anlagen oder allgemeiner bei dem Betrieb von technischen Vorrichtungen kommt der Mensch, der eine solche technische Vorrichtung betreiben oder nutzen möchte häufig in Kontakt mit Bestandteilen oder Zuständen dieser Vorrichtung, die bei nicht ordnungsgemäßem Betrieb unmittelbar oder mittelbar seine physische Gesundheit gefährden können.

Beispielsweise geht der Betrieb chemisch technischer Anlagen häufig mit der unmittelbaren Gefahr der Freisetzung gesundheitsschädlicher Stoffe aus der ansonsten ordnungsgemäß gegen die Umgebung verschlossenen Anlage einher.

Eine weitere technische Anlage, die mindestens eine mittelbare Gefährdung für Personen darstellen kann, wenn diese nicht ordnungsgemäß betrieben wird, ist etwa das Flugzeug. Hier besteht das Gefährdungspotential bei nicht ordnungsgemäßem Betrieb darin, dass das Flugzeug im Betrieb ein technisches Versagen aufweist, dass im schlimmsten Fall zum Absturz des Flugzeugs resultiert.

Um den vorgenannten Gefährdungen zu begegnen werden heutzutage für den sicheren Betrieb technischer Anlagen arbeitsorganisatorische Anweisungen erstellt, die durch die Personen, die die technische Anlage in Betrieb nehmen oder die die technische Anlage auf Betriebssicherheit überprüfen zu befolgen hat.

Solche arbeitsorganisatorische Anweisungen sind vielfach in Form von sogenannten "Checklisten" abgefasst, bei denen die betreffende Person die zu prüfenden oder auszuführenden Arbeitsschritte einzeln und in einer bestimmten Reihenfolge etwa in tabellarischer Form vorgelegt bekommt und die Prüfung und/oder Ausführung von Arbeitsschritten jeweils einzeln zumeist unter weiterer Angabe von Ort, Zeit und Datum der Prüfung und/oder Ausführung zu bestätigen hat.

Arbeitsorganisatorische Anweisungen der vorgenannten Art weisen ein Reihe von Nachteilen auf, die im Zusammenhang mit der Bedeutung des genauen Befolgens der Anweisungen teilweise schwerwiegende Auswirkungen auf die Betriebssicherheit der jeweils betriebenen technischen Anlage haben.

So ist es etwa bei den vorgenannten arbeitsorganisatorischen Anweisungen der vorgenannten Art möglich, dass die mit der Prüfung / Bearbeitung der Arbeitsschritte betraute Person zunächst die Arbeitsschritte nach eigenem Ermessen ausführt und nachfolgend die tabellarische "Checkliste" bestätigt, wobei wegen der zeitlichen und räumlichen Entkoppelung von Ausführung und Bestätigung des Arbeitsschrittes eine genaue Prüfung und/oder Ausführung der Arbeitsschritte nicht mehr oder in falscher Reihenfolge erfolgt. Des Weiteren führt die Notwendigkeit der unmittelbaren Bestätigung der "Checkliste" nach Ausführung der notwendigen Prüfung und/oder des notwendigen Arbeitsschrittes zu einer Ablenkung der betreffenden Person vom eigentlichen Arbeitsschritt, was mindestens die Geschwindigkeit des gesamten Vorgangs verringert, in Einzellfällen aber wiederum zu einem Gefährdungspotential führt. Unter anderem die vorgenannte Ablenkung führt wohl auch zu dem teilweise geringen Umsetzungsgrad oder Grad an Akzeptanz der vorgenannten arbeitsorganisatorischen Anweisungen, so dass teilweise auch alleine deshalb die notwendige exakte Ausführung der Anweisung gänzlich oder nur in Auszügen unterbleibt.

Im Lichte der vorgenannten Problemstellungen im Zusammenhang mit der ordnungsgemäßen Abarbeitung der vorgenannten arbeitsorganisatorischen Anweisungen besteht also der Bedarf eine Möglichkeit dafür zu schaffen, dass eine zeitlich, räumlich und inhaltlich korrekte Abarbeitung der arbeitsorganisatorischen Anweisung erfolgt, die zugleich die Ablenkung der ausführenden Person von der auszuführenden Arbeit minimiert.

Eine Möglichkeit dies zu erzielen ist die weitere Kontrolle der die arbeitsorganisatorische Anweisung ausführenden Person durch mindestens eine weitere Person im Sinne eines vier Augen Prinzips, wobei die mindestens eine weitere Person dazu abgestellt wird die korrekte Abarbeitung der arbeitsorganisatorischen Anweisung zu überwachen. Solche Ansätze sind aber ineffizient, da zwei Personen zur Bearbeitung einer Arbeit eingesetzt werden müssen. Hinzu kommt der durch die Ineffizienz begründete wirtschaftliche Nachteil einer solchen Verfahrensweise.

Eine andere Möglichkeit umfasst den Einsatz von technischen Hilfsmitteln zur Sicherung der ordnungsgemäßen Bearbeitung von vorgenannten arbeitsorganisatorischen Anweisungen, wie dies auch Gegenstand der vorliegenden Erfindung ist.

Ein Beispiel für ein System nach dem Stand der Technik wird in der US 2003/0025682 beschrieben.

Technische Vorrichtungen, die Sachverhalte oder Zustände bei Abfrage einer Person automatisiert wiedergeben, sind aus der Telekommunikationstechnik etwa als sogenannte Anrufcomputer mit Spracherkennung mittlerweile allgemein bekannt.

Ebenfalls bekannt sind technische Vorrichtungen zur automatischen Feststellung von Ort und Zeit, sowie zur hiervon abhängigen Wiedergabe von Information. Solche technische Vorrichtungen sind etwa neuartige Mobiltelefone oder Taschencomputer, die eine Terminplanerfunktion und eine Ortsbestimmungsvorrichtung (z. B. "GPS") umfassen. Ähnliche Geräte wären etwa Navigationsgeräte, die eine Weganweisung in Abhängigkeit von Ort und Geschwindigkeit eines Fahrzeugs ausgeben.

Eine bis heute aber ungelöste Aufgabe ist es eine Vorrichtung zur Verfügung zu stellen, die es erlaubt den Betrieb und/oder die Prüfung des sicheren Betriebs einer technischen Vorrichtung sicherzustellen, ohne hierbei die betreibende oder prüfende Person von der eigentlichen Betriebs- und/oder Prüfungstätigkeit mehr als unbedingt notwendig abzulenken.

Es wurde nun überraschend gefunden, dass eine Vorrichtung für den sicheren Betrieb einer technischen Anlage umfassend
a) eine akustische Wiedergabeeinheit,
b) mindestens eine Bedieneinheit mit mindestens einer Taste,
c) sowie eine erste Sende-/Empfangseinheit und
d) zu der ersten Sende-/Empfangseinheit korrespondierende weitere Sende-/Empfangseinheit verbunden mit der technischen Anlage,
**dadurch gekennzeichnet,** dass
I) die akustische Wiedergabeeinheit eine Reihe von Handlungsanweisungen wiedergibt, wobei die vorgenannten Einheiten so miteinander verbunden sind, dass alle Handlungsanweisungen, außer der ersten Handlungsanweisung, erst nach einem Signal von der Bedieneinheit mit mindestens einer Taste oder der ersten Sende-/Empfangseinheit wiedergegeben werden und wobei
II) die vorgenannten Einheiten so miteinander verbunden sind, dass mindestens einer der Wiedergaben ein Signal von der vorgenannten ersten Sende-/Empfangseinheit vorausgeht,
diese Aufgabe zu lösen vermag.

Die Vorrichtung für den sicheren Betrieb einer technischen Anlage erlaubt es durch die Abhängigkeit der Wiedergabe von Handlungsanweisungen von Signalen der vorgenannten technischen Einheiten erstmals in vorteilhafter Weise die Ausführung der Reihe von Handlungsanweisungen in der richtigen Reihenfolge sicherzustellen.

Es ist somit nicht mehr möglich versehentlich oder absichtlich Handlungsanweisungen nicht mehr durchzuführen. Dies führt zu einer wesentlichen Steigerung der Betriebsicherheit der technischen Anlage.

Des Weiteren führt die erfindungsgemäße Vorrichtung zu einer Entlastung der betreibenden Person, die die Handlungsanweisung nun nur akustisch erfassen muss und keinen Rückgriff auf geschriebene Handlungsanweisungen im Sinne der "Checklisten" nach dem Stand der Technik mehr benötigt.

Die mindestens einmalige Wiedergabe von Handlungsanweisungen in Abhängigkeit vom Signal von der Sende-/Empfangseinheit ermöglicht es weiter erstmals eine inhaltlich oder chronologisch falsche Bearbeitung der Handlungsanweisung sicher zu unterbinden, weil diese Signale durch die betreffende Person nicht unmittelbar beeinflussbar sind und direkt auf den Zustand der technischen Anlage zurückzuführen sind.

Bevorzugt kann in der erfindungsgemäßen Vorrichtung die akustische Wiedergabeeinheit mit der Bedieneinheit mit mindestens einer Taste auch so verbunden sein, dass bei Betätigung der Bedieneinheit die zuvor ausgegebene Handlungsanweisung wiederholt wird.

Die Tatsache, dass die Einheiten so miteinander verbunden sind, dass Handlungsanweisungen außer der ersten Handlungsanweisung erst nach einem Signal von der Bedieneinheit mit mindestens einer Taste oder der Sende-/Empfangseinheit wiedergegeben werden und dass mindestens einer der Wiedergaben ein Signal von der Sende-/Empfangseinheit vorausgeht erfolgt üblicherweise nach dem Fachmann allgemein bekannten Methoden.

So können etwa die Einheiten, wenn sie gesammelt in der erfindungsgemäßen Vorrichtung vorliegen auf Halbleiterplatten mit geeigneten Halbleitertopographien verschaltet werden. Auch einfache elektronische Verschaltungen, wie sie dem Fachmann allgemein bekannt sind, können hier Einsatz finden.

Die akustische Wiedergabeeinheit bezeichnet im Zusammenhang mit der vorliegenden Erfindung eine Einheit zur Wiedergabe von Toninformationen, wie sie allgemein bekannt ist. Diese Einheit zur Wiedergabe von Toninformationen muss nicht physikalisch mit der Vorrichtung zum sicheren Betrieb einer technischen Anlage verbunden sein, sie kann auch eine von der Vorrichtung mit den anderen Einheiten räumlich getrennte Einheit sein.

Ein einfaches, nicht abschließendes Beispiel für eine Einheit zur Wiedergabe von Toninformationen, die mit der Vorrichtung mit den anderen Einheiten physikalisch verbunden ist, ist ein in die Vorrichtung für den sicheren Betrieb einer technischen Anlage integrierter Lautsprecher.

Ein einfaches, nicht abschießendes Beispiel für eine Einheit zur Wiedergabe von Toninformationen, die mit der Vorrichtung mit den anderen Einheiten nicht physikalisch verbunden ist, ist eine mittels Funkverbindung oder Infrarotverbindung an die Vorrichtung für den sicheren Betrieb einer technischen Anlage angebundene Einheit mit einem Lautsprecher.

Die Bedieneinheit mit mindestens einer Taste bezeichnet im Zusammenhang mit der vorliegenden Erfindung jegliche berührungsempfindliche Einrichtung an der erfindungsgemäßen Vorrichtung, wobei im Sinne der vorliegenden Erfindung Tasten auch Bedienelemente sein können, die eine Berührungsempfindlichkeit etwa im Sinne einer Drehbewegung aufweisen. Nicht abschließende Beispiele von Tastern im Sinne der vorliegenden Erfindung sind Drucktaster, Drehräder und sogenannte "Trackballs". Diese können auch mehrfach oder in beliebigen Kombinationen als Bedieneinheit vorliegen.

Die erste und weitere Sende-/Empfangseinheit bezeichnen im Zusammenhang mit der vorliegenden Erfindung jeweils Einheiten zur Übertragung von Informationen entweder mittels einer mindestens kurzzeitigen physikalischen Verbindung zwischen erster Sende-/Empfangseinheit der erfindungsgemäßen Vorrichtung und korrespondierender weiterer Sende-/Empfangseinheit, verbunden mit der technischen Anlage oder mittels einer drahtlosen Übertragungstechnik, wie sie allgemein bekannt ist. Nicht abschließende Beispiele für solche drahtlose Übertragungstechniken sind etwa die Übertragung durch ein Funksignal oder ein Lichtsignal, wie beispielsweise Infrarotlicht.

Die korrespondierende weitere Sende-/Empfangseinheit, verbunden mit der technischen Anlage, ist gemäß der vorliegenden Erfindung mit der technischen Anlage insofern verbunden, als dass diese Signale über den Zustand der technischen Anlage aufnehmen und an die erste Sende-/Empfangseinheit der erfindungsgemäßen Vorrichtung übermitteln kann. Nicht abschließende Beispiele für solche Signale über den Zustand der technischen Anlage, sind etwa Temperatur oder bei mechanischen Teilen der technischen Anlage, Drehgeschwindigkeit einer Welle oder Ähnliches.

In der erfindungsgemäßen Vorrichtung sind die vorgenannten Einheiten bevorzugt so miteinander verbunden, dass nicht nur einer Wiedergabe ein Signal von der ersten Sende-/Empfangseinheit vorausgeht, sondern jeder Wiedergabe, außer der ersten, ein solches Signal vorausgehen muss.

In einer ersten bevorzugten Weiterentwicklung der erfindungsgemäßen Vorrichtung umfasst diese auch eine optische Wiedergabeeinheit.

Eine optische Wiedergabeeinheit bezeichnet im Zusammenhang mit der vorliegenden Erfindung eine Einheit zur Wiedergabe von Bild- und/oder Textinformation, wie sie allgemein bekannt ist. Diese Einheit Wiedergabe von Bild- und/oder Textinformation muss nicht physikalisch mit der Vorrichtung zum sicheren Betrieb einer technischen Anlage verbunden sein, sie kann auch eine von der Vorrichtung mit den anderen Einheiten räumlich getrennte Einheit sein.

Ein einfaches, nicht abschießendes Beispiel für eine Einheit zur Wiedergabe von Bild- und/oder Textinformation, die mit der Vorrichtung mit den anderen Einheiten physikalisch verbunden ist, ist ein in die Vorrichtung für den sicheren Betrieb einer technischen Anlage integrierter Bildschirm. Bevorzugt ein Flüssigkristallbildschirm.

Ein einfaches, nicht abschießendes Beispiel für eine Einheit zur Wiedergabe von Bild- und/oder Textinformationen, die mit der Vorrichtung mit den anderen Einheiten nicht physikalisch verbunden ist, ist eine mittels Funkverbindung oder Infrarotverbindung an die Vorrichtung für den sicheren Betrieb einer technischen Anlage angebundene Einheit mit einem Bildschirm.

Die in der Vorrichtung, gemäß der gerade beschriebenen ersten bevorzugten Weiterentwicklung, enthaltene optische Wiedergabeeinheit gibt wie die akustische Wiedergabeeinheit Handlungsanweisungen wieder und ist wie diese mit den übrigen Einheiten der Vorrichtung so verbunden, dass alle Handlungsanweisungen außer der ersten Handlungsanweisung erst nach einem Signal von der Einheit zur Erfassung von Zeit, oder der Bedieneinheit mit mindestens einer Taste oder der Sende-/Empfangseinheit wiedergegeben werden. Mindestens einer der Wiedergaben aus der akustischen und/oder der optischen Wiedergabeeinheit geht auch ein Signal von der vorgenannten Sende-/Empfangseinheit voraus.

Das Vorsehen der optischen Wiedergabeeinheit in der Vorrichtung gemäß der ersten bevorzugten Weiterentwicklung derselben ist vorteilhaft, weil die optische Wiedergabe erläuternd zu der akustischen Wiedergabe hinzugezogen werden kann und somit zu einer weiteren Entlastung der betreibenden Person, wie auch zu einer weiteren Fehlersicherheit beim Betrieb durch vereinfachtes Verständnis des Sachverhaltes beiträgt.

Innerhalb der ersten bevorzugten Weiterentwicklung der erfindungsgemäßen Vorrichtung ist es bevorzugt, wenn die Vorrichtung eine optische Wiedergabeeinheit umfasst und der Taster der Bedieneinheit als berührungsempfindliche Einrichtung ausgeführt und in die optische Wiedergabeeinheit integriert ist, so dass die optische Wiedergabeeinheit zugleich auch als Taster dient.

In einer zweiten bevorzugten Weiterentwicklung der erfindungsgemäßen Vorrichtung umfasst diese auch eine Einheit zur Erfassung von Zeit und eine erste Speichereinheit zur elektronischen Speicherung der Signale aus der Bedieneinheit mit mindestens einer Taste und/oder der ersten Sende-/Empfangseinheit und der eine Einheit zur Erfassung von Zeit.

Die Einheit zur Erfassung von Zeit ist im Zusammenhang mit der vorliegenden Erfindung üblicherweise ein in die erfindungsgemäße Vorrichtung integrierter Quarzzeitgeber.

Die Ausführungsform gemäß der zweiten bevorzugten Weiterentwicklung der Vorrichtung ist besonders vorteilhaft, weil bei Bestätigung der Ausführung der Handlungsanweisung etwa mittels der Bedieneinheit mit mindestens einer Taste eine zusätzliche Erfassung und Speicherung in der Speichereinheit der Signale zusammen mit der Zeit der Bearbeitung erfolgen kann.

Damit wird der betreibenden Person diese im Rahmen von "Checklisten" nach dem Stand der Technik notwendige Bestätigung und Protokollierung abgenommen und kann darüber hinaus im Rahmen von späteren Überprüfungen dokumentiert werden. Auch Konsistenzprüfungen können anhand der gegebenenfalls ebenfalls gespeicherten Zeitdaten von der Einheit zur Erfassung von Zeit dahingehend durchgeführt werden, als dass die gemäß der Handlungsanweisung auszuführende Handlung auch in einem hierfür vorgesehen Zeitraum bearbeitet wurde. Dies dient wiederum der Steigerung des sicheren Betriebs der Anlage.

In einer dritten bevorzugten Weiterentwicklung der erfindungsgemäßen Vorrichtung umfasst diese weiter eine Einheit zur Erfassung des Orts und eine zweite elektronische Speichereinheit zur elektronischen Speicherung der geometrischen Abmessungen der technischen Anlage.

Die Vorrichtung gemäß der dritten bevorzugten Weiterentwicklung ist weiter bevorzugt dadurch gekennzeichnet, dass mindestens einer Wiedergabe von Handlungsanweisungen ein Signal von der Einheit zur Erfassung des Orts vorausgeht.

Diese dritte bevorzugte Weiterentwicklung ist besonders vorteilhaft, weil die Wiedergabe von Handlungsanweisungen somit abhängig vom Aufenthaltsort der ausführenden Person wiedergegeben werden können, bzw. die betreffende Person die Handlungsanweisung erst an dem Ort der Ausführung derselben erhält, womit ein Vergessen der Handlungsanweisung auf dem Weg zu ihrer Ausführung ausgeschlossen ist.

In einer weiteren bevorzugten Weiterentwicklung der erfindungsgemäßen Vorrichtung umfasst diese neben den Einheiten gemäß der dritten bevorzugten Weiterentwicklung auch eine erste Speichereinheit gemäß der zweiten bevorzugten Weiterentwicklung, in der die Signale der Einheiten der erfindungsgemäßen Vorrichtung zusammen mit dem Signal aus der Einheit zur Erfassung des Ortes elektronisch gespeichert werden. Innerhalb dieser weiteren bevorzugten Weiterentwicklung ist es weiter bevorzugt, dass die Vorrichtung auch eine Einheit zur Erfassung von Zeit gemäß der zweiten bevorzugten Weiterentwicklung umfasst.

Mit dieser weiteren bevorzugten Weiterentwicklung ist es möglich am Ende des Betriebs der technischen Anlage nachzuprüfen, wo und wann welche Handlungsanweisungen wiedergegeben wurden und ob die entsprechenden vorherigen Handlungsanweisungen ausgeführt wurden, denn nur dann wäre das entsprechende vorhergehende Signal auch gesendet worden. Damit wird der nach dem Stand der Technik bis hierhin notwendige Protokollierungsaufwand der betreibenden Person vollständig abgenommen.

Die Vorrichtung nach den bevorzugten Ausführungsformen, die mindestens eine erste oder zweite Speichereinheit umfassen, können auf diesen Speichereinheiten auch Daten enthalten, die etwa die Handlungsanweisungen in akustischer und/oder optischer Form darstellbar machen.

Um solche Daten auf den Speichereinheiten zu hinterlegen, kann beispielsweise in einem ersten Schritt die sicher zu betreibende Anlage mit der erfindungsgemäßen Vorrichtung abgegangen werden und an den betreffenden Orten und/oder zu den betreffenden Zeiten über die erste Sendeempfangseinheit eine Verbindung mit der technischen Anlage hergestellt werden, während beispielsweise eine Nachricht an die später prüfende Person eingegeben wird.

Eine solche Eingabe kann beispielsweise über eine Tonaufnahmeeinheit geschehen, welche in noch einer bevorzugten Ausführungsform der Vorrichtung in dieser ebenfalls enthalten ist. Geeignete Tonaufnahmeeinheiten sind beispielsweise Mikrofone, wie diese allgemein bekannt sind.

Solche Tonaufnahmeeinheiten sind in diesen Ausführungsformen mit mindestens einer der Speichereinheiten so verbunden, dass die gesprochene Information auf einer Speichereinheit hinterlegt wird. In Ausführungsformen, in denen die Vorrichtung auch eine Einheit zur Erfassung des Orts und/oder der Zeit umfasst, werden diese Informationen zusammen mit der gesprochenen Information auf der Speichereinheit hinterlegt.

Eine solche Eingabe kann beispielsweise auch über eine Bildaufnahmeeinheit geschehen, welche in noch einer bevorzugten Ausführungsform der Vorrichtung in dieser ebenfalls enthalten ist, wenn die erfindungsgemäße Vorrichtung auch eine optische Wiedergabeeinheit umfasst. Geeignete Bildaufnahmeeinheiten sind beispielsweise Digitalkameras, wie man sie aus der Mobilfunktechnik mittlerweile allgemein kennt.

Solche Bildaufnahmeeinheiten sind in diesen Ausführungsformen mit mindestens einer der Speichereinheiten so verbunden, dass die aufgenommene Information auf einer Speichereinheit hinterlegt wird. In Ausführungsformen, in denen die Vorrichtung auch eine Einheit zur Erfassung des Orts und/oder der Zeit umfasst, werden diese Informationen zusammen mit der aufgenommenen Information auf der Speichereinheit hinterlegt.

Ein weiterer Gegenstand der vorliegenden Erfindung ist ein System für den sicheren Betrieb einer technischen Anlage, dadurch gekennzeichnet, dass mindestens zwei erfindungsgemäße Vorrichtungen oder Vorrichtungen gemäß der zuvor beschriebenen bevorzugten Weiterentwicklungen entweder unmittelbar über ihre erste Sende-/Empfangseinheit oder mittelbar über eine dritte Sende-/Empfangseinheit angeschlossen an eine zentrale Datenerfassungs- und Datenverarbeitungsvorrichtung miteinander verbunden sind.

Das erfindungsgemäße System für den sicheren Betrieb einer technischen Anlage ist insbesondere vorteilhaft, da dieses System es erstmals erlaubt die Aufgabe des Betriebs einer technischen Anlage unter einzelnen betreibenden Personen zu verteilen, während aber die Handlungsanweisungen, die an die einzelnen betreibenden Personen durch die im System befindlichen erfindungsgemäßen Vorrichtungen oder Vorrichtungen gemäß der zuvor beschriebenen bevorzugten Weiterentwicklungen wiedergegeben werden auf einander abgestimmt werden können.

Hierdurch kann zum einen eine Doppelarbeit vermieden werden, was wiederum wirtschaftlich vorteilhaft ist, zum anderen können aber so Arbeiten, die auf einander folgende, räumlich getrennte Arbeiten der betreibenden Personen erfordern in sicherer Weise mit einander abgestimmt werden. Beispielsweise kann hierdurch sichergestellt werden, dass die erste betreibende Person einen Teil der technischen Anlage erst dann in Betrieb nimmt, wenn durch ein Signal aus der Vorrichtung einer anderen betreibenden Person sichergestellt ist, dass diese Person sich nicht mehr im Gefahrenbereich des in Betrieb zu nehmenden Teils der technischen Anlage befindet.

In einer bevorzugten Weiterentwicklung des erfindungsgemäßen Systems für den sicheren Betrieb einer technischen Anlage sind die mindestens zwei erfindungsgemäßen Vorrichtungen oder Vorrichtungen gemäß der zuvor beschriebenen bevorzugten Weiterentwicklungen mittelbar über eine dritte Sende-/Empfangseinheit angeschlossen an eine zentrale Datenerfassungs- und Datenverarbeitungsvorrichtung mit einander verbunden und die zentrale Datenerfassungs- und Datenverarbeitungsvorrichtung ist wiederum an eine elektronische Datenübermittlungsvorrichtung angeschlossen, über die Signale an Empfangsvorrichtungen außerhalb der technischen Anlage übermittelt werden.

Diese bevorzugte Weiterentwicklung des erfindungsgemäßen Systems ist besonders vorteilhaft, weil durch die elektronische Datenübermittlungsvorrichtung etwa Signale, betreffend einen Zustand der technischen Anlage, automatisch an Empfangsvorrichtungen außerhalb der technischen Anlage etwa befindlich bei einer anderen Firma, als jener, die die technische Anlage betreibt, übermittelt werden können.

So ist es beispielsweise erstmals möglich bereits unmittelbar mit Prüfung der Anlage durch die betreibenden Personen ein notwendiges Ersatzteil, dass den weiteren sicheren Betrieb der Anlage sicherstellt, bei einer mit der Empfangsvorrichtung ausgestatteten Zulieferfirma zu ordem. Nach dem Stand der Technik, würde dies zeitversetzt mit Abschluss und Auswertung der "Checkliste" erfolgen. Die hierdurch erzielte Zeiteinsparung verhindert unter Umständen einen längeren, notwendigen Stopp der technischen Anlage, was wiederum wirtschaftlich vorteilhaft ist.

Noch ein weiterer Gegenstand der vorliegenden Erfindung ist ein Verfahren für den sicheren Betrieb einer technischen Anlage unter Verwendung der vorgenannten erfindungsgemäßen Vorrichtung oder des erfindungsgemäßen Systems, wobei mindestens eine Abfolge der Schritte
a) Wiedergabe einer Handlungsanweisung,
b) Ausführung der Handlungsanweisung und
c) Bestätigung der Ausführung der Handlungsanweisung
ausgeführt wird, **dadurch gekennzeichnet,** dass in mindestens einer Abfolge die Bestätigung gemäß dem Schritt c) unmittelbar oder mittelbar durch ein Signal von der technischen Anlage erfolgt.

Das erfindungsgemäße Verfahren ist besonders vorteilhaft, weil durch das Erfordernis, dass in mindestens einer Abfolge die Bestätigung gemäß dem Schritt c) des Verfahrens durch die technische Anlage sichergestellt wird, dass eine Ausführung erfolgt ist.

In einer ersten bevorzugten Ausführungsform des vorliegenden Verfahrens wird die Abfolge der Schritte mehr als einmal, jeweils mit unterschiedlichen Handlungsanweisung in einer festgelegten Reihenfolge, ausgeführt. Die vorgenannte Reihenfolge wird üblicherweise so gewählt, dass hierdurch die Sicherheit der technischen Anlage gewährleistet ist. Dem Fachmann auf dem Gebiet der Sicherheitstechnik sind die Art und Reihenfolge solcher Handlungsanweisungen etwa aus einschlägigen Sicherheitsvorschriften allgemein bekannt.

In einer zweiten bevorzugten Ausführungsform des vorliegenden Verfahrens wird noch ein Schritt d) ausgeführt in dem die Schritte b) und c) in einer elektronischen Speichereinheit gespeichert werden.

Diese bevorzugte Weiterentwicklung ist besonders vorteilhaft, weil damit eine spätere Kontrolle der Ausführung ermöglicht wird.

In einer dritten bevorzugten Ausführungsform des vorliegenden Verfahrens wird noch ein Schritt e) ausgeführt in dem das Ergebnis der Ausführung von dem Schritt c) an einen Dritten übermittelt wird.

Solche Dritte sind etwa Instandhaltungsunternehmen, Sicherheitseinrichtungen oder Ähnliche.

Demnach sind die Ergebnisse, die aus der Ausführung von dem Schritt c) gemäß dem Schritte e) an einen Dritten weitergegeben werden auch üblicherweise so, dass die das Verfahren ausführende Person im Rahmen desselben feststellt, dass ein Fehler in der zu betreibenden technischen Anlage aufgetreten ist, was etwa nach einer Handlungsanweisung betreffend die Prüfung eines Teils der technischen Anlage der Fall sein kann.

Diese bevorzugte Weiterentwicklung ist besonders vorteilhaft, weil damit keine Verzögerung zwischen Feststellung des vorgenannten Fehlers und sicherheitstechnischer Folge eintritt, wodurch ein etwaiges Gefährdungspotential minimiert wird.

Die vorliegende Erfindung wird nachfolgend anhand von Beispielen und Abbildungen näher erläutert, ohne sie jedoch hierdurch darauf zu beschränken.

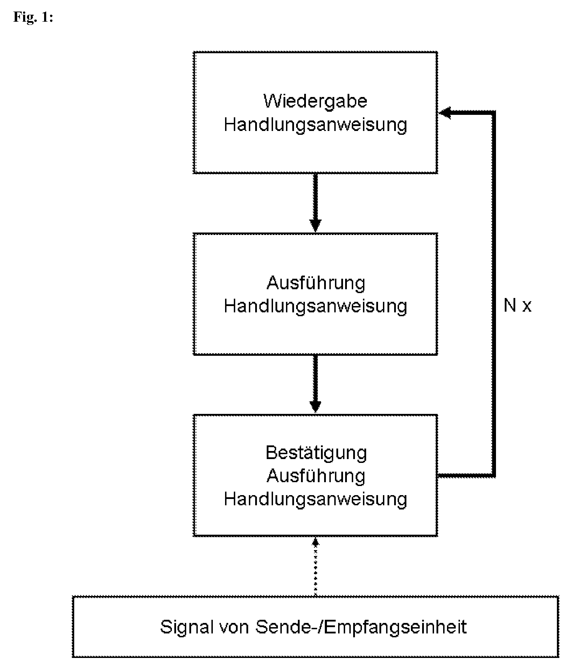

Die Fig. 1 zeigt eine schematische Darstellung des erfindungsgemäßen Verfahrens unter Verwendung der erfindungsgemäßen Vorrichtung oder des erfindungsgemäßen Systems, wobei N Abfolgen gemäß des bevorzugten erfindungsgemäßen Verfahrens ausgeführt werden.

Die Fig. 2 zeigt eine schematische Darstellung des Kühlturms (C), der gemäß dem Beispiel 1 auf sicheren Betrieb hin überprüft werden soll, sowie die Kontrollpunkte (1) bis (26), bei denen Handlungsanweisungen durch die erfindungsgemäße Vorrichtung wiedergegeben werden.

Die Fig. 3 zeigt eine schematische Darstellung des Flugzeugs, dass gemäß dem Beispiel 2 auf sicheren Betrieb hin überprüft werden soll, sowie die Kontrollpunkte 1 bis 21, bei denen Handlungsanweisungen durch die erfindungsgemäße Vorrichtung wiedergegeben werden.

### Beispiele:

### Beispiel 1: Sicherer Betrieb einer chemischen Anlage

In diesem Ausführungsbeispiel wird eine transportable erfindungsgemäße Vorrichtung in Form eines Handgerätes mit einer akustischen Wiedergabeeinheit in Form eines Lautsprechers, einem "Touchscreen" und einem ersten Funk-Transmitter als erste Sende-/Empfangseinheit eingesetzt, der mit einem weiteren Funktransmitter als korrespondierende weitere Sende-/Empfangseinheit drahtlos verbunden ist und wobei der weitere Funktransmitter in einer Messwarte in einem separaten Gebäude
(A) mit dem dort befindlichen Steuerungsrechner der Anlage fest verbunden ist. Alternativ kann auch eine Verbindung mit einem anderen weiteren Funktransmitter in einem weiteren separaten Gebäude
(B) drahtlos hergestellt werden, wobei dieser andere weitere Funktransmitter über eine Datenleitung, die in das Gebäude (A) zu der Messwarte und dem dort befindlichen Steuerungsrechner verbunden ist. In dem Gebäude (B) ist an den dort befindlichen anderen weiteren Funktransmitter eine Halteeinheit für die erfindungsgemäße Vorrichtung vorgesehen, die eine physische Anbindung der erfindungsgemäßen Vorrichtung und direkte, d. h. nicht drahtlose, Verbindung ermöglicht.

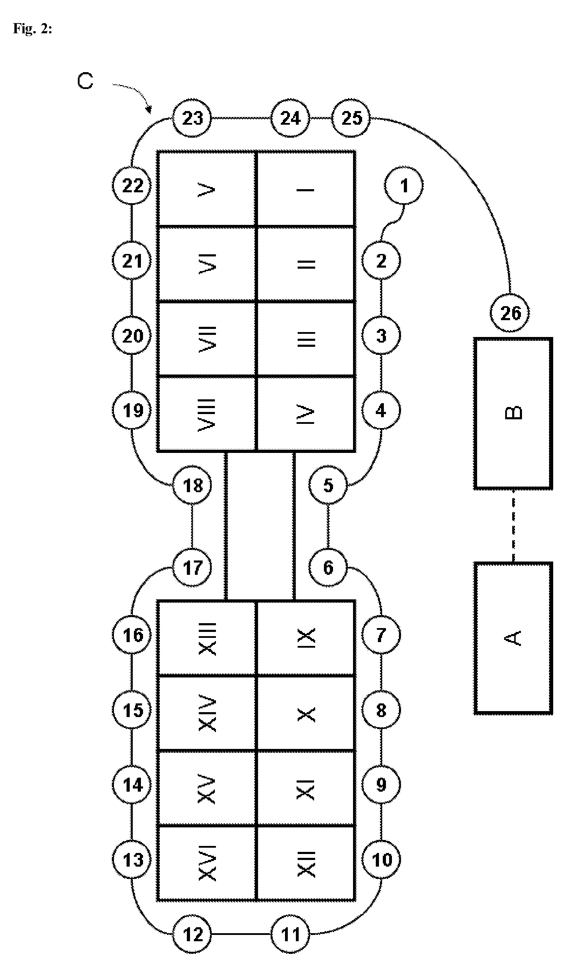

Die Vorrichtung enthält darüber hinaus einen Global-Positioning-System (GPS) Empfänger, wie dieser allgemein bekannt ist, eine erste elektronische Speichereinheit in Form eines allgemein bekannten Flash-Speichers, auf dem die Inspektionswege um einen in der Fig. 2 dargestellten Kühlturm (C), bestehend aus 16 Kühlzellen (I-XVI), beim Rundgang aufgenommen wurden und hinterlegt sind, und einen weiteren elektronischen Speicher in Form eines allgemein bekannten Flash-Speichers zur Speicherung der Eingaben aus dem Touchscreen, sowie der Signale aus dem ersten Funktransmitter und dem GPS-Empfänger. Außerdem enthält die Vorrichtung einen Quarzzeitgeber, dessen Signale gleichsam auf dem weiteren elektronischen Speicher gespeichert werden können.

Wenn eine Person, betraut mit der technischen Prüfung des Kühlturms, sich dem Kühlturm (C) nähert, stellen die beiden vorgenannten Funktransmitter eine Verbindung mit einander her und mittels der Funkübertragung wird auf die Vorrichtung in einen der Flash-Speicher, ein Tagesplan einer auszführenden Inspektion seit letzter erfolgter technischer Prüfung des Kühlturms (C) übermittelt. In diesen Tagesplänen befinden sich auch Hinweise auf die in der Zwischenzeit durch den Anlagen-Steuerungsrechner aufgezeichneten Fehlermeldungen.

Der Touchscreen gibt sodann einen Übersichtsplan des Inspektionsrundgangs, wie er in der Fig. 2 schematisch dargestellt ist, wieder und beginnt mit Wiedergabe der ersten Handlungsanweisung, in der die prüfende Person zunächst akustisch aufgefordert wird sich zum aufleuchtenden Punkt (1) zu begeben. Gibt der GPS-Empfänger das Signal, dass die prüfende Person sich an der angegebenen Stelle befindet, so wird die nächste Handlungsanweisung wiedergegeben, nach der an dieser Stelle eine Kontrolle des Ventilators der Kühlzelle (I) und des zentral angeflanschten Getriebes und Elektromotors durchzuführen ist, ob Schäden, Vibrationen oder Laufgeräusche erkennbar sind. Auf dem Touchscreen erscheinen zwei Tasten.

Eine Taste trägt die Aufschrift "Keine Schäden festzustellen", die andere "Schäden erkannt". Wird seitens der prüfenden Person die Taste "Keine Schäden festzustellen" bedient, so wird zum einen in einem der Flash-Speicher diese Tatsache mit Ort (vom GPS-Empfänger) und Datum, sowie Uhrzeit (vom Quarzzeitgeber) hinterlegt und zum anderen von dem ersten Funktransmitter über den zweiten Funktransmitter an den Steuerungsrechner der Anlage übertragen. Nach Hinterlegung der Daten auf dem Steuerungsrechner der Anlage wird wiederum von dem zweiten Funktransmitter ein Bestätigungssignal an die Vorrichtung übermittelt, wonach diese die überprüfende Person auffordert sich zu dem Punkt (2) zu begeben, wo wiederum zu einer Kontrolle analog zu dem Punkt (1) aufgefordert wird. Wurde im Steuerungsrechner der Anlage betreffend eine Stelle, die über eine Kontrolle an einem der Punkte (1) bis (26) zugänglich ist, eine Fehlermeldung hinterlegt, so wird die Handlungsanweisung durch entsprechende Signalübermittlung über die Funktransmitter um die Ausgabe der Fehlermeldung ergänzt und die prüfende Person angewiesen diesen Sachverhalt insbesondere zu überprüfen.

Stellt die prüfende Person den hinterlegten und übermittelten Fehler ebenfalls fest, so würde er in diesem Fall die Taste "Schäden erkannt" bedienen und die Vorrichtung würde sodann - in Abhängigkeit von Art und Umfang der Fehlermeldung - eine Auswahl anbieten nach der beispielsweise entweder "Schaden behoben", oder "Ersatzteil für X bestellen" auswählbar wären. In jedem Fall der Auswahl wird die Auswahl mit Ort, Datum und Uhrzeit auf einem Flash-Speicher hinterlegt. Im Fall der Auswahl "Ersatzteil für X bestellen", stellt die Vorrichtung über ihren Funktransmitter eine Verbindung zu einem dritten Funktransmitter, verbunden mit dem Ersatzteillagerhaltungssystem des Anlagenbetreibers oder dem entsprechenden System des hiermit beauftragten Unternehmen her und ordert das Ersatzteil.

An den Punkten (17) und (18) befinden sich Pumpen, die Schmiermittel zur Schmierung der Ventilatorlager in den Zellen (I-XVI) fördern. Diese Pumpen besitzen Stellvorrichtungen zur Einstellung der Pumpgeschwindigkeit, sowie eine Temperaturanzeige, die die aktuelle Schmiermitteltemperatur des umlaufenden Schmiermittels anzeigt.

An jenen Punkten wird der prüfenden Person die Handlungsanweisung wiedergegeben, dass die angezeigte Temperatur auf dem Touchscreen mittels des dort angezeigten Ziffernblocks einzugeben ist. Die Eingaben werden auf einem der Flashspeicher hinterlegt und zugleich über die Funktransmitter an den Steuerungsrechner im Gebäude (A) der Anlage übermittelt. Mittels eines auf dem Steuerungsrechner hinterlegten Programms wird ermittelt, ob die Temperatur innerhalb eines als sicher geltenden Bereichs liegt. Wenn die Temperatur als sicher gilt, so wird ein Signal an die erfindungsgemäße Vorrichtung übermittelt, dass durch die prüfende Person der nächste Kontrollpunkt (18, oder 19) aufzusuchen ist. Liegt die Temperatur außerhalb des als sicher geltenden Bereiches, so wird die prüfende Person aufgefordert mittels der Stellvorrichtung die Pumpgeschwindigkeit zu verändern (üblicherweise zu erhöhen um einen schnelleren Austausch der Schmiermittel und damit geringere Wärmeaufnahme in den Lagern zu erzielen) und an dem Prüfpunkt für einen Zeitraum zu verbleiben, wonach wiederum zur Eingabe der abgelesenen Temperatur aufgefordert wird. Der vorgenannte Zeitraum wird ebenfalls mit dem Signal bzgl. Handlungsanweisung zur Veränderung der Pumpgeschwindigkeit übermittelt und richtet sich nach auf dem Steuerungsrechner hinterlegten Erfahrungswerten aus vorangegangenen Prüfungen. Dieser Vorgang wiederholt sich, bis wieder eine als sicher geltende Temperatur erreicht wird. Wird dies aber nach einer fünfmaligen Wiederholung nicht erreicht, so wird durch den Steuerungsrechner der Anlage die Drehgeschwindigkeit der Ventilatoren verändert (üblicherweise verringert) um den sicheren Betrieb weiter gewährleisten zu können und einen Ausfall zu verhindern.

Die prüfende Person wird sodann aufgefordert sich zum nächsten Punkt zu begeben.

Ist das angeforderte Ersatzteil vorrätig, so begibt sich eine weitere Person, mit einer gleichen erfindungsgemäßen Vorrichtung, wie die erste Person an die entsprechend durch die Handlungsanweisung auf dieser Vorrichtung angegebene Position. Bestätigt die zweite Person nach erfolgter Arbeit den Ersatz, so übermittelt die Vorrichtung dies an den Steuerungsrechner der Anlage, der wiederum an die Vorrichtung der ersten Person ein entsprechendes Signal sendet, wenn diese noch in der Nähe ist und fordert zur nochmaligen Prüfung an betreffender Stelle auf.

Die 16 Kühlturmzellen (I-XVI) des Kühlturms (C) haben eine Kapazität von 6000 Kubikmeter Wasser pro Stunde und die Vorlaufpumpen, befindlich an den Kontrollpunkten (5) und (6), von 8000 Kubikmeter Wasser pro Stunde.

Durch die zustandsorientierte Instandhaltung muss eine gesicherte Kapazität der Vorlaufpumpen von 6000 Kubikmeter Wasser pro Stunde immer gewährleistet sein. Bei Ausfall von Pumpen, Rohrleitungen, Ventilatoren, Getriebe oder Elektromotoren müssen in kürzester Zeit die schadhaften Anlagenteile ausgetauscht werden. Ist eine solche Kapazität nicht dauerhaft gewährleistet, so können die durch den Kühlturm (C) gekühlten Anlagenteile der angeschlossenen chemischen Produktionsanlage nicht hinreichend gekühlt werden. Im schlimmsten Fall kommt es hierdurch zu einem sogenannten "durchgehen" von exothermen Reaktionen in der chemischen Produktionsanlage, was zu Explosionen, mindestens aber zu einem Betriebsstillstand und daraus folgenden wirtschaftlichen Nachteilen führen würde.

Aus dem vorstehend beschriebenen Beispiel wird ersichtlich, dass mit der erfindungsgemäßen Vorrichtung und dem mit dieser Vorrichtung ausgeführten Verfahren eine ordnungsgemäße Sicherheitsprüfung einer verfahrenstechnischen Anlage möglich ist, die Fehlermöglichkeiten minimiert. Insgesamt gestaltet sich somit der Betrieb der technischen Anlage sicherer und erweist sich die Sicherstellung eines solchen sicheren Betriebs als einfacher und damit billiger.

### Beispiel 2: Sicherheitsprüfung von Flugzeugen vor Flugfreigabe

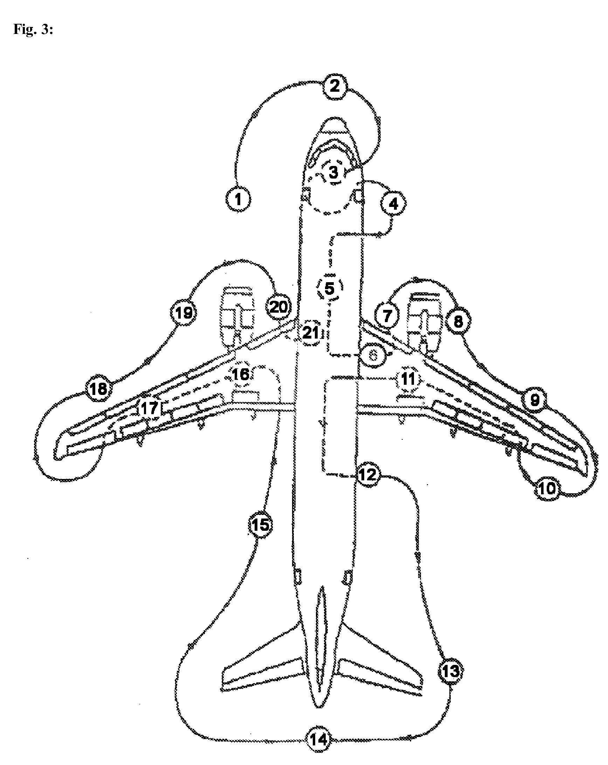

In diesem Ausführungsbeispiel wird eine transportable erfindungsgemäße Vorrichtung in Form eines Handgerätes mit einer akustischen Wiedergabeeinheit in Form eines Lautsprechers, einem "Touchscreen" und einem ersten Funk-Transmitter als erste Sende-/Empfangseinheit eingesetzt, der mit einem weiteren Funktransmitter als korrespondierende weitere Sende-/Empfangseinheit drahtlos verbunden ist und wobei der weitere Funktransmitter in einem Flugzeug mit dem Bordcomputer des Flugzeugs, das schematisch mit dem auszuführenden Kontrollgang in der Fig. 3 dargestellt ist, fest verbunden ist.

Die Vorrichtung enthält darüber hinaus einen Global-Positioning-System (GPS) Empfänger, wie dieser allgemein bekannt ist, eine erste elektronische Speichereinheit in Form eines allgemein bekannten Flash-Speichers, auf dem die geometrischen Daten des Flugzeugs hinterlegt sind, und einen weiteren elektronischen Speicher in Form eines allgemein bekannten Flash-Speichers zur Speicherung der Eingaben aus dem Touchscreen, sowie der Signale aus dem ersten Funktransmitter und dem GPS-Empfänger. Außerdem enthält die Vorrichtung einen Quarzzeitgeber.

Wenn eine Person, betraut mit der technischen Prüfung des Flugzeugs, sich dem Flugzeug nähert stellen die beiden vorgenannten Funktransmitter eine Verbindung mit einander her und mittels der Funkübertragung wird auf die Vorrichtung in einen der Flash-Speicher, das technische Logbuch und das Kabinen Logbuch seit letzter erfolgter technische Prüfung des Flugzeugs übermittelt. In diesen Logbüchern befinden sich auch Hinweise auf die in der Zwischenzeit durch den Bordcomputer aufgezeichneten Fehlermeldungen.

Der Touchscreen gibt sodann einen Übersichtsplan des Flugzeugs, wie er in der Fig. 3 schematisch dargestellt ist, wieder und beginnt mit der Wiedergabe der ersten Handlungsanweisung, in der die prüfende Person zunächst akustisch aufgefordert wird sich zum aufleuchtenden Punkt (1) zu begeben. Gibt der GPS-Empfänger das Signal, dass die prüfende Person sich an der angegebenen Stelle befindet, so wird die nächste Handlungsanweisung wiedergegeben, nach der an dieser Stelle eine Sichtkontrolle des Flugzeugs durchzuführen ist, ob Schäden erkennbar sind. Auf dem Touchscreen erscheinen zwei Tasten.

Eine Taste trägt die Aufschrift "Keine Schäden festzustellen", die andere "Schäden erkannt". Wird seitens der prüfenden Person die Taste "Keine Schäden festzustellen" bedient, so wird zum einen in einem der Flash-Speicher diese Tatsache mit Ort (vom GPS-Empfänger) und Datum, sowie Uhrzeit (vom Quarzzeitgeber) hinterlegt und zum anderen von dem ersten Funktransmitter über den zweiten Funktransmitter an den Bordcomputer des Flugzeugs übertragen wird. Nach Hinterlegung der Daten auf dem Bordcomputer des Flugzeugs wird wiederum von dem zweiten Funktransmitter ein Bestätigungssignal an die Vorrichtung übermittelt, wonach diese die überprüfende Person auffordert sich zu dem Punkt (2) zu begeben, wo wiederum zu einer Sichtkontrolle analog zu dem Punkt (1) aufgefordert wird. Wurde im Bordcomputer betreffend eine Stelle, die über eine Sichtkontrolle an einem der Punkte (1) bis (21) zugänglich ist, eine Fehlermeldung hinterlegt, so wird die Handlungsanweisung durch entsprechende Signalübermittlung über die Funktransmitter um die Ausgabe der Fehlermeldung ergänzt und die prüfende Person angewiesen diesen Sachverhalt insbesondere zu überprüfen. Stellt die prüfende Person den hinterlegten und übermittelten Fehler ebenfalls fest, so würde er in diesem Fall die Taste "Schäden erkannt" bedienen und die Vorrichtung würde sodann - in Abhängigkeit von Art und Umfang der Fehlermeldung - eine Auswahl anbieten nach der beispielsweise entweder "Schaden behoben", oder "Ersatzteil für X bestellen" auswählbar wären. In jedem Fall der Auswahl wird die Auswahl mit Ort, Datum und Uhrzeit auf einem Flash-Speicher hinterlegt. Im Fall der Auswahl "Ersatzteil für X bestellen", stellt die Vorrichtung über ihren Funktransmitter eine Verbindung zu einem dritten Funktransmitter, verbunden mit dem Ersatzteillagerhaltungssystem des Flugzeugbetreibers, oder dem entsprechenden System des hiermit beauftragten Unternehmen her und ordert das Ersatzteil.

Die prüfende Person wird sodann aufgefordert sich zum nächsten Punkt zu begeben.

Ist das angeforderte Ersatzteil vorrätig, so begibt sich eine weitere Person, mit einer gleichen erfindungsgemäßen Vorrichtung, wie die erste Person an die entsprechend durch die Handlungsanweisung auf dieser Vorrichtung angegebene Position. Bestätigt die zweite Person nach erfolgter Arbeit den Ersatz, so übermittelt die Vorrichtung dies an den Bordcomputer des Flugzeugs, der wiederum an die Vorrichtung der ersten Person ein entsprechendes Signal sendet, wenn diese noch in der Nähe ist und fordert zur nochmaligen Prüfung an betreffender Stelle auf.

An dem Punkten 3, 11 und 16, die hier beispielsweise herausgegriffen werden, erfolgt eine Handlungsanweisung an die prüfende Person, in der der Hydraulikdruck der Bremsanlage des Fahrwerks des Flugzeugs zu prüfen ist. Abhängig davon, ob im Bordcomputer ein ausreichender Druck dokumentiert ist oder nicht erfolgt die weitere Anweisung Hydrauliköl nachzufüllen. Erst wenn ein Drucksensor in der Bremsanlage des Flugzeugs einen ausreichenden Druck misst und diesen an den Bordcomputer übermittelt, sendet dieser über den Funktransmitter ein Signal an den Funktransmitter der Vorrichtung, dass ein ausreichender Druck, der sodann mit aktuellem Wert im Bordcomputer und in einem Flashspeicher der Vorrichtung mitsamt Ort, Datum und Uhrzeit hinterlegt wird, vorliegt. Erst auf Basis dieses Signals wird durch die Vorrichtung die Handlungsanweisung betreffend die Punkte 4, 12 und 17 wiedergegeben.

Erst wenn gemäß der Aufzeichnungen in einem Flash-Speicher der erfindungsgemäßen Vorrichtung alle Handlungsanweisungen bestätigt worden sind, wird der prüfenden Person mitgeteilt, dass die Prüfung abgeschlossen ist. Als letztes wird die Person aufgefordert sich zu einem Computer des Flugzeugbetreibers zu begeben, an dem er mittels eines seriellen Schnittstellenkabels, dass eine Datenverbindung der Vorrichtung mit dem Computer herstellt, die Daten aus dem Flashspeicher der Vorrichtung in das Sicherheitssystem des Flugzeugbetreibers überspielt. Mit dem fehlerfreien Vorliegen des Datensatzes wird dem geprüften Flugzeug in dem System die Flugfreigabe erteilt.

Aus dem vorstehend beschriebenen Beispiel wird ersichtlich, dass mit der erfindungsgemäßen Vorrichtung und dem mit dieser Vorrichtung ausgeführten Verfahren eine ordnungsgemäße Sicherheitsprüfung eines Flugzeugs möglich ist, die Fehlermöglichkeiten minimiert, dass aber zum anderen auch eine Koordination von Arbeiten an der zu prüfenden technischen Anlage durch das erfindungsgemäße System möglich ist. Insgesamt gestaltet sich somit der Betrieb der technischen Anlage sicherer und erweist sich die Sicherstellung eins solchen sicheren Betriebs als einfacher und damit billiger.

## Patentansprüche

1. Vorrichtung für den sicheren Betrieb einer technischen Anlage umfassend
a) eine akustische Wiedergabeeinheit,
b) mindestens eine Bedieneinheit mit mindestens einer Taste,
c) sowie eine erste Sende-/Empfangseinheit und
d) zu der ersten Sende-/Empfangseinheit korrespondierende weitere Sende-/Empfangseinheit verbunden mit der technischen Anlage,
**dadurch gekennzeichnet, dass**
I) die akustische Wiedergabeeinheit eine Reihe von Handlungsanweisungen wiedergibt, wobei die vorgenannten Einheiten so mit einander verbunden sind, dass alle Handlungsanweisungen außer der ersten Handlungsanweisung erst nach einem Signal von der Bedieneinheit mit mindestens einer Taste oder der ersten Sende-/Empfangseinheit wiedergegeben werden und wobei
II) die vorgenannten Einheiten so mit einander verbunden sind, dass mindestens einer der Wiedergaben ein Signal von der vorgenannten ersten Sende-/Empfangseinheit vorausgeht.

2. Vorrichtung gemäß Anspruch 1, **dadurch gekennzeichnet, dass** die akustische Wiedergabeeinheit nicht physikalisch mit der Vorrichtung zum sicheren Betrieb einer technischen Anlage verbunden ist.

3. Vorrichtung gemäß Anspruch 1 oder 2, **dadurch gekennzeichnet, dass** sie eine optische Wiedergabeeinheit umfasst.

4. Vorrichtung gemäß eines der vorstehenden Ansprüche, **dadurch gekennzeichnet, dass** sie eine Einheit zur Erfassung von Zeit und eine erste Speichereinheit zur elektronischen Speicherung der Signale aus der Bedieneinheit mit mindestens einer Taste und/oder der ersten Sende-/Empfangseinheit umfasst.

5. Vorrichtung gemäß eines der vorstehenden Ansprüche, **dadurch gekennzeichnet, dass** sie eine Einheit zur Erfassung des Orts und eine zweite elektronische Speichereinheit zur elektronischen Speicherung der geometrischen Abmessungen der technischen Anlage umfasst.

6. System für den sicheren Betrieb einer technischen Anlage, **dadurch gekennzeichnet, dass** mindestens zwei Vorrichtungen gemäß eines der Ansprüche 1 bis 5 entweder unmittelbar über ihre erste Sende-/Empfangseinheit oder mittelbar über eine dritte Sende-/Empfangseinheit angeschlossen an eine zentrale Datenerfassungs- und Datenverarbeitungsvorrichtung miteinander verbunden sind.

7. System gemäß Anspruch 6, **dadurch gekennzeichnet, dass** die mindestens zwei Vorrichtungen gemäß eines der Ansprüche 1 bis 5 mittelbar über eine dritte Sende-/Empfangseinheit angeschlossen an eine zentrale Datenerfassungs- und Datenverarbeitungsvorrichtung miteinander verbunden sind und die zentrale Datenerfassungs- und Datenverarbeitungsvorrichtung wiederum an eine elektronische Datenübermittlungsvorrichtung angeschlos s e n ist, über die Signale an Empfangsvorrichtungen außerhalb der technischen Anlage übermittelt werden.

8. Verfahren für den sicheren Betrieb einer technischen Anlage unter Verwendung der Vorrichtung gemäß eines der Ansprüche 1 bis 5 oder des Systems gemäß eines der Ansprüche 6 oder 7, wobei mindestens eine Abfolge der Schritte
a) Wiedergabe einer Handlungsanweisung,
b) Ausführung der Handlungsanweisung und
c) Bestätigung der Ausführung der Handlungsanweisung
ausgeführt wird, **dadurch gekennzeichnet, dass** in mindestens einer Abfolge die Bestätigung gemäß dem Schritt c) unmittelbar oder mittelbar durch ein Signal von der technischen Anlage erfolgt.

9. Verfahren gemäß Anspruch 8, **dadurch gekennzeichnet, dass** die Abfolge der Schritte mehr als einmal jeweils mit unterschiedlichen Handlungsanweisung in einer festgelegten Reihenfolge ausgeführt wird.

10. Verfahren gemäß eines der Ansprüche 8 oder 9, **dadurch gekennzeichnet, dass** noch ein Schritt d) ausgeführt wird, in dem die Schritte b) und c) in einer elektronischen Speichereinheit gespeichert werden.

## Claims

1. Device for safely operating a technical installation, comprising
a) an acoustic playback unit,
b) at least one operating unit having at least one button,
c) and a first transmitting/receiving unit, and
d) a further transmitting/receiving unit corresponding to the first transmitting/receiving unit and connected to the technical installation,
**characterized in that**
I) the acoustic playback unit plays back a series of handling instructions, the above-mentioned units being connected to one another in such a manner that all handling instructions, apart from the first handling instruction, are played back only after a signal from the operating unit having at least one button or from the first transmitting/receiving unit, and wherein
II) the above-mentioned units are connected to one another in such a manner that a signal from the above-mentioned first transmitting/receiving unit precedes at least one of the playbacks.

2. Device according to Claim 1, **characterized in that** the acoustic playback unit is not physically connected to the device for safely operating a technical installation.

3. Device according to Claim 1 or 2, **characterized in that** it comprises an optical playback unit.

4. Device according to one of the preceding claims, **characterized in that** it comprises a unit for recording time and a first memory unit for electronically storing the signals from the operating unit having at least one button and/or from the first transmitting/receiving unit.

5. Device according to one of the preceding claims, **characterized in that** it comprises a unit for recording the location and a second electronic memory unit for electronically storing the geometrical dimensions of the technical installation.

6. System for safely operating a technical installation, **characterized in that** at least two devices according to one of Claims 1 to 5 are either directly connected to one another via their first transmitting/receiving unit or are indirectly connected to one another via a third transmitting/receiving unit connected to a central data acquisition and data processing device.

7. System according to Claim 6, **characterized in that** the at least two devices according to one of Claims 1 to 5 are indirectly connected to one another via a third transmitting/receiving unit connected to a central data acquisition and data processing device and the central data acquisition and data processing device is in turn connected to an electronic data transmission device which is used to transmit signals to receiving devices outside the technical installation.

8. Method for safely operating a technical installation using the device according to one of Claims 1 to 5 or the system according to either of Claims 6 and 7, wherein at least a sequence of the following steps
a) playback of a handling instruction,
b) execution of the handling instruction, and
c) confirmation of the execution of the handling instruction
is carried out, **characterized in that** the confirmation according to step c) is effected directly or indirectly by means of a signal from the technical installation in at least one sequence.

9. Method according to Claim 8, **characterized in that** the sequence of steps is carried out more than once with different handling instructions in a stipulated order in each case.

10. Method according to either of Claims 8 and 9, **characterized in that** a step d) is also carried out in which steps b) and c) are stored in an electronic memory unit.

## Revendications

1. Dispositif pour le fonctionnement sécurisé d'une installation technique, comprenant
a) une unité de reproduction sonore,
b) au moins une unité de commande comportant au moins une touche,
c) ainsi qu'une première unité d'émission/réception et
d) une unité d'émission/réception supplémentaire, correspondant à la première unité d'émission/réception et reliée à l'installation technique,
**caractérisé en ce que**
I) l'unité de reproduction sonore reproduit une série d'instructions de manipulation, lesdites unités étant reliées les unes aux autres de telle sorte que toutes les instructions de manipulation, à l'exception de la première instruction de manipulation, ne sont reproduites qu'après un signal de l'unité de commande comportant au moins une touche ou de la première unité d'émission/réception et
II) lesdites unités étant reliées les unes aux autres de telle sorte qu'au moins l'une des reproductions précède un signal de ladite première unité d'émission/réception.

2. Dispositif selon la revendication 1, **caractérisé en ce que** l'unité de reproduction sonore n'est pas reliée physiquement au dispositif pour le fonctionnement sécurisé d'une installation technique.

3. Dispositif selon la revendication 1 ou 2, **caractérisé en ce qu'**il comprend une unité de reproduction visuelle.

4. Dispositif selon l'une des revendications précédentes, **caractérisé en ce qu'**il comprend une unité destinée à détecter le temps et une première unité de mémoire destinée à la mémorisation électronique des signaux issus de l'unité de commande comportant au moins une touche et/ou de la première unité d'émission/réception.

5. Dispositif selon l'une des revendications précédentes, **caractérisé en ce qu'**il comprend une unité destinée à détecter le lieu et une deuxième unité de mémoire électronique destinée à la mémorisation électronique des dimensions géométriques de l'installation technique.

6. Système pour le fonctionnement sécurisé d'une installation technique, **caractérisé en ce qu'**au moins deux dispositifs selon l'une des revendications 1 à 5 sont reliés l'un à l'autre soit directement par le biais de la première unité d'émission/réception, soit indirectement par le biais d'une troisième unité d'émission/réception raccordée à un dispositif central d'acquisition de données et de traitement de données.

7. Système selon la revendication 6, **caractérisé en ce que** les au moins deux dispositifs selon l'une des revendications 1 à 5 sont reliés l'un à l'autre indirectement par le biais d'une troisième unité d'émission/réception raccordée à un dispositif central d'acquisition de données et de traitement de données et le dispositif central d'acquisition de données et de traitement de données est raccordé à son tour à un dispositif de communication de données électronique par le biais duquel des signaux sont communiqués à des dispositifs de réception en dehors de l'installation technique.

8. Procédé de fonctionnement sécurisé d'une installation technique en utilisant le dispositif selon l'une des revendications 1 à 5 ou le système selon l'une des revendications 6 ou 7, au moins une séquence des étapes
a) reproduction d'une instruction de manipulation,
b) exécution de l'instruction de manipulation et
c) confirmation de l'exécution de l'instruction de manipulation
étant exécutée, **caractérisé en ce que** dans au moins une séquence, la confirmation selon l'étape c) s'effectue directement ou indirectement par un signal de l'installation technique.

9. Procédé selon la revendication 8, **caractérisé en ce que** la séquence des étapes est exécutée plus d'une fois avec à chaque fois une instruction de manipulation différente dans un ordre donné.

10. Procédé selon l'une des revendications 8 ou 9, **caractérisé en ce qu'**une étape d) est exécutée en plus, dans laquelle les étapes b) et c) sont mises en mémoire dans une unité de mémoire électronique.
